Europäisches Patentamt

European Patent Office

Office européen des brevets

(11) Publication number : **0 473 452 A2**

# EUROPEAN PATENT APPLICATION

(21) Application number : **91307973.7**

(22) Date of filing : **30.08.91**

(51) Int. Cl.⁵ : **G06F 9/46**

(30) Priority : **31.08.90 GB 9019025**

(43) Date of publication of application :
**04.03.92 Bulletin 92/10**

(84) Designated Contracting States :
**DE GB**

(71) Applicant : **NCR CORPORATION**
**World Headquarters**
**Dayton, Ohio 45479 (US)**

(72) Inventor : **Duerrschmid, Otto**
**Am Wachberg 18**
**W-8901 Horgau (DE)**
Inventor : **King, Edward C.**
**4945 Norris Road**
**Fremont, California 94536 (US)**

(74) Representative : **Robinson, Robert George**
**International Patent Department NCR Limited**
**915 High Road North Finchley**
**London N12 8QJ (GB)**

(54) Work station having multiprocessing capability.

(57)    A work station having multiprocessing capability comprises a main processing means (10), a plurality of slave processors (12a to 12n) for sharing jobs of a processing task to be carried out in essentially parallel manner, register means including first (24) and second (22) registers each having a plurality of bit positions respectively corresponding to said plurality of slave processors (12a to 12n), wherein each slave processor participating in said processing task sets to a first logic state the corresponding bit position of the first register (24) upon completion of its job, and wherein said main processor means (10) sets to a first logic state each bit position of said second register (22) corresponding to a slave processor which is to participate in said processing task, and coincidence detecting means for generating a completion signal upon coincidence of the states of all bit positions of said first and second registers. Said completion signal is fed to said slave processors for resetting thereof and to said main processors means for indicating thereto that all jobs have been completed.

EP 0 473 452 A2

**FIG. 1**

This invention relates to a work station or similar data processing system having multiprocessing capability, and relates in particular to the synchronization of multiprocessing in a work station.

For increasing processing speed, work stations may use several processors operating essentially in parallel on a task. Since, in general, the various processors will need different periods of time to finish their job, it is necessary to monitor completion of the jobs by all processors. Up to now this has been done by software monitoring. However, this requires a large number of monitoring cycles of the central processing unit (CPU), considerably reducing the overall processing time of the system.

It is an object of the present invention to provide a work station using multiprocessing and having a simplified synchronization of the multiple processors.

It is a further object of the invention to provide a work station using multiprocessing and accomplishing synchronization with a considerably reduced processing time.

According to the invention there is provided a work station having a plurality of parallel processors for sharing jobs of a processing task to be carried out in essentially parallel manner, characterized by register means connected to said processors and having a plurality of bit positions respectively associated with said processors, each of said processors participating in said processing task being arranged to set the associated bit position of said register means to a predetermined logic state upon completion of its job, and detection means arranged to generate a completion signal upon the bit positions of said register means achieving a predetermined logic configuration.

Preferably, a work station according to the invention having a main processor and a plurality of parallel slave processors includes multiprocessor synchronizing means comprising a masking register having bit positions respectively assigned to the slave processors, each bit position being arranged to be set by the main processor to a first logic state or a second logic state according to whether or not the corresponding slave processor is to participate in a processing task. A slave processor status register is configured in a similar manner to the mask register, the bit positions of the slave processor status register being connected to the respective slave processors, and each of these bit positions being arranged to be set to a first logic state upon job completion by the corresponding slave processor. Gate means generate a task completion signal to be fed both to the main processor and the slave processors upon determining coincidence between the contents of the mask register and the slave processor status register.

One embodiment of the present invention will now be described by way of example with reference to the accompanying drawings, in which:-

Fig. 1 is a block diagram illustrating a synchronizing circuit and its connections to main and slave processors; and

Fig. 2 is a schematic flow diagram illustrating the assignment of various jobs of a task to different slave processors.

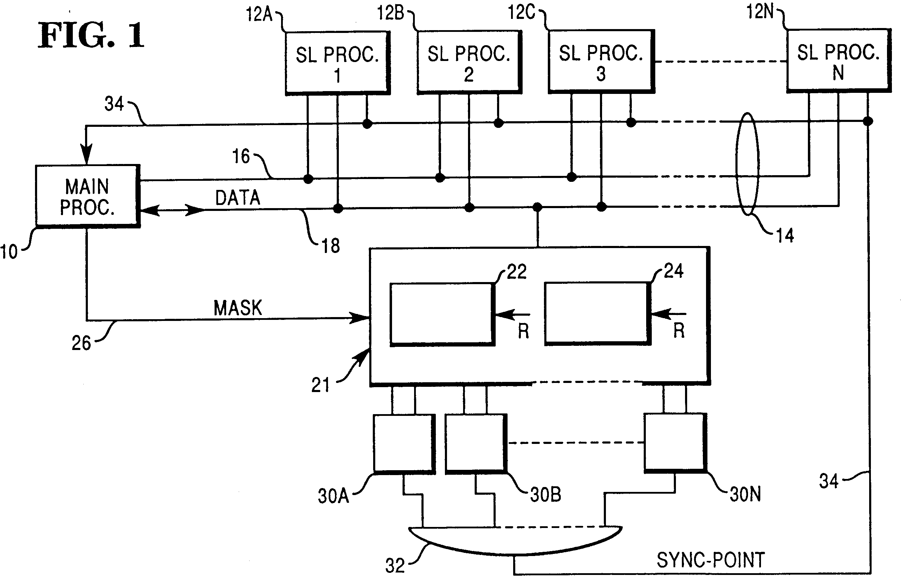

Referring to Fig. 1, the work station which incorporates the synchronizing circuit of the preferred embodiment of the invention comprises a main processor 10 which may be an Intel 80386 or 80486 microprocessor communicating through a bus 14 with a plurality of slave processors 12a...12n which may also be implemented by microprocessors such as Intel 80386 or 80486. Bus 14 may be a known microchannel including address/data lines 18 and various command lines 16.

For multiprocessing operations, the main processor 10 assigns various jobs of a task to one or more of the slave processors 12a...12n. The activated slave processors will need different time periods to complete their jobs. Therefore, it is necessary that the main processor 10 monitors the time when all slave processors have completed their jobs. Previously, this was done by software monitoring which means that the main processor 10 has to interrupt its processing a large number of times for the purpose of performing interrogation cycles for ascertaining whether all slave processors have completed their jobs.

According to the invention, a novel hardware feature is used in order to relieve the main processor 10 from such monitoring.

As illustrated in Fig. 1, there is provided a register block 21 including a mask register 22 and a synchronization register 24 each of which has a plurality of bit positions (flip-flops) respectively associated with or corresponding to the slave processors 12a...12n. For example, bit position 1 of the register 22 and bit position 1 of the register 24 each correspond to the slave processor 12a, bit position 2 of the register 22 and bit position 2 of the register 24 each correspond to the slave processor 12b... and bit position n of the register 22 and bit position n of the register 24 each correspond to the slave processor 12n.

Furthermore, there are provided a plurality of coincidence gates, e.g. EXCLUSIVE-NOR gates, 30a...30n which respectively correspond to the slave processors 12a...12n. Corresponding bit positions of the registers 22 and 24, such as bit position 1 of the two registers 22 and 24, are connected to the inputs of a corresponding one of the EXCLUSIVE-NOR gates 30a to 30n.

All outputs of the EXCLUSIVE-NOR gates 30a to 30n are connected to the inputs of an AND gate 32 having its output connected to a SYNC-POINT line 34 connected to inputs of all the slave processors 12a...12n and to an input of the main processor 10.

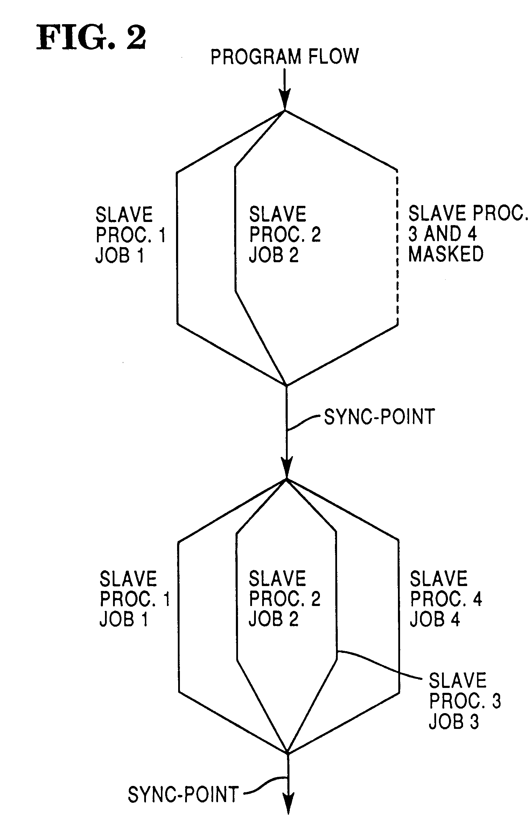

Referring now also to Fig. 2, if the main processor 10 has to perform a processing task it decides which of the slave processors 12a to 12n has to perform a portion of this task, such portion usually being called a job. For those slave processors which are not participating in the task, i.e. which do not have a job, the corresponding bit positions in the mask register 22 are set to a predetermined binary state, e.g. logic "1", all bit positions of the register 22 having previously been reset to logic "0" through an input R in a preceding reset cycle. For the purpose of setting the bit positions of the register 22 to selected states, the main processor 10 may send over a MASK line 26 a corresponding series of "0" and "1" bits to the MASK register 22. Alternatively, parallel setting of the bit positions of the MASK register 22 may be used.

With all the bit positions of the register 24 having been reset to "0" through an input R in a preceding reset cycle, each slave processor participating in the current task sets its associated bit position in the register 24 to "1" upon completion of its job. As soon as the two corresponding bits in register 22 and register 24 are equal, i.e. both "0" or both "1", the output of the corresponding one of the EXCLUSIVE-NOR gates 30a to 30n is logic "1", supplying a "1" to the AND gate 32.

As soon as there is coincidence in respect of all corresponding bits of the registers 22 and 24 all inputs to the AND gate 32 are "1". Upon all inputs to the AND gate 32 being "1", a SYNC-POINT signal appears at the output of the AND gate 32. The SYNC-POINT signal is applied to all the slave processors 12a to 12n and to the main processor 10, resetting all the slave processors which participated in the task to a non participating condition and indicating to the main processor 10 that all jobs have been completed.

Referring to Fig. 2 there is illustrated in the upper part thereof the situation where only slave processor 1 and slave processor 2 of a total of four slave processors are involved in a processing task, the other two slave processors being masked. In the situation illustrated in the lower part of Fig. 2, all four slave processors are involved in a processing task.

Although in the preferred embodiment according to Fig. 1 two registers 22 and 24 and EXCLUSIVE-NOR gates 30a to 30n are used, other implementations of the invention are possible. For example, there could be used only one flip-flop register with the bit positions corresponding to the non-participating slave processors being set to logic "1", and with all other bit positions being reset to logic "0" prior to the commencement of a processor task. As each participating slave processor completes its job it sets the corresponding bit position to logic "1" such that upon completion of all jobs all register bit position outputs are at the same logic level "1" so as to cause the SYNC-point signal to be generated on line 34.

It will be appreciated that in operation of a work station in accordance with the invention, after the main processor has activated selected slave processors for carrying out particular jobs, the main processor 10 is free for other operations until the completion of all jobs is indicated to the main processor 10.

## Claims

1. A work station having a plurality of parallel processors (12a-12n) for sharing jobs of a processing task to be carried out in essentially parallel manner, characterized by register means (21) connected to said processors (12a-12n) and having a plurality of bit positions respectively associated with said processors, each of said processors participating in said processing task being arranged to set the associated bit position of said register means (21) to a predetermined logic state upon completion of its job, and detection means (30a-30n, 32) arranged to generate a completion signal upon the bit positions of said register means achieving a predetermined logic configuration.

2. A work station according to claim 1, characterized in that said detection means (30a-30n, 32) is arranged to generate said completion signal upon each bit position of said register means (21) associated with a processor participating in said processing task being set to said predetermined logic state.

3. A work station according to either claim 1 or claim 2, characterized by main processing means (10) and in that said parallel processors serve as slave processors (12a-12n), said completion signal being arranged to be fed to said slave processors for resetting those slave processors which participated in said processing task to a non participating condition, and also being arranged to be fed to said main processing means (10) for indicating thereto that all jobs have been completed.

4. A work station according to claim 3, characterized in that said register means (21) includes a first register (24) having a plurality of bit positions respectively associated with said plurality of slave processors (12a-12n), and a second register (22) having a plurality of bit positions respectively corresponding to said plurality of slave processors, each slave processor participating in said processing task being arranged to set the associated bit position of said first register (24) to a predetermined logic state upon completion of its job, and said main processing means (10) being arranged to set to a predetermined logic state each bit position of said second register (22) corresponding to a slave processor which is to participate in said processing task, said detection means (30a-30n, 32) being arranged to generate said completion signal upon coincidence of the logic states of all bit positions of said first and second registers.

5. A work station according to claim 4, including a plurality of gates (30a-30n) respectively corresponding to said plurality of slave processors (12a-12n), each gate being associated with the corresponding bit positions of said first and second registers (24,22) and being arranged to provide an output signal of predetermined logic state in response to both corresponding bit positions being in the same logic state, and a further gate (32) to which are applied the output signals of said plurality of gates (30a-30n), said further gate being arranged to provide said completion signal when all the output signals of said plurality of gates have said predetermined logic state.

6. A work station according to claim 5, wherein each of said plurality of gates (30a-30n) is an EXCLUSIVE-NOR gate and said further gate (32) is an AND gate.

FIG. 1

# FIG. 2

PROGRAM FLOW

SLAVE PROC. 1 JOB 1

SLAVE PROC. 2 JOB 2

SLAVE PROC. 3 AND 4 MASKED

SYNC-POINT

SLAVE PROC. 1 JOB 1

SLAVE PROC. 2 JOB 2

SLAVE PROC. 4 JOB 4

SLAVE PROC. 3 JOB 3

SYNC-POINT